# EUROPÄISCHE PATENTSCHRIFT

(11) **EP 3 098 960 B1**
(45) Veröffentlichungstag und Bekanntmachung des Hinweises auf die Patenterteilung: **15.11.2023**
(21) Anmeldenummer: 16166561.7
(22) Anmeldetag: 22.04.2016
(51) Int. Cl.: H02P 1/00, H02P 21/24

(54) **VERFAHREN ZUM BETRIEB EINER ELEKTRISCHEN MASCHINE UND ANTRIEB**
METHOD FOR OPERATING AN ELECTRIC MACHINE AND DRIVE
PROCEDE DESTINE AU FONCTIONNEMENT D'UNE MACHINE ELECTRIQUE ET ENTRAINEMENT

(30) Priorität: 11.05.2015 DE 102015208710
(43) Veröffentlichungstag der Anmeldung: 30.11.2016
(73) Patentinhaber: Baumüller Nürnberg GmbH, 90482 Nürnberg (DE)
(72) Erfinder: SCHINDLER, Achim, 85072 Eichstätt (DE)
(74) Vertreter: FDST Patentanwälte

(56) Entgegenhaltungen:
- EP-A2- 2 061 147
- DE-A1-102013 222 075
- DE-B4-102008 045 622
- GB-A- 2 489 434
- US-A1- 2007 285 047
- US-A1- 2008 258 672
- US-A1- 2011 227 519

## Beschreibung

Die Erfindung betrifft ein Verfahren zum Betrieb einer elektrischen Maschine. Unter elektrische Maschine wird insbesondere eine Synchronmaschine verstanden. Die elektrische Maschine ist vorzugsweise geberlos. Die Erfindung betrifft ferner einen Antrieb mit einer elektrischen Maschine, und mit einem Umrichter.

Bei der Regelung von elektrischen Maschinen wird üblicherweise deren Drehzahl mittels eines Gebers erfasst, und anhand der realisierten Drehzahl die Bestromung angepasst, sofern es sich bei der elektrischen Maschine um einen Elektromotor, wie beispielsweise einen Synchronmotor handelt. Derartige Geber sind einerseits vergleichsweise kostenintensiv in der Herstellung. Andererseits vergrößert sich der Bauraum der elektrischen Maschine, und bei der Montage muss ein zusätzlicher Verkabelungsschritt ausgeführt werden. Ferner ist ein Anpassen der Steuerung der elektrischen Maschine auf den Geber erforderlich. Zudem ist bei einem Ausfall des Gebers keine Regelung der elektrischen Maschine mehr möglich, so dass diese bis zu einem Austausch oder einer Reparatur des Gebers stillgesetzt werden muss.

Eine Alternative hierzu ist die sogenannte geberlose oder sensorlose feldorientierte Regelung mittels geeigneter Ansteuerung eines Umrichters, bei der üblicherweise ein Strom- oder Spannungsvektor mit der gewünschten Drehzahl des Elektromotors bezüglich eines festen Koordinatensystems rotiert wird. Der Spannungsvektor umfasst hierbei eine flussbildende und eine drehmomentbildende Komponente. Über ein Modell der Synchronmaschine wird anhand von gemessenen Strom- und Spannungsvektoren die Drehzahl berechnet wird. Hierbei wird insbesondere die Gegen-Elektromotorische Kraft der elektrischen Maschine ausgenutzt. Bei vergleichsweise geringen Drehzahlen ist die Gegen-Elektromotorischen Kraft und folglich auch die jeweiligen Komponenten der gemessenen Strom- und Spannungsvektoren vergleichsweise klein, so dass eine Regelung der Drehzahl mit hinreichender Genauigkeit nicht möglich ist. Falls daher die Ermittlung einer bei der Regelung verwendeten Abweichung fehlerhaft sein sollte, würde die elektrische Maschine falsch angesteuert werden, sodass der Motor nicht mit der gewünschten Drehzahl gefahren werden kann. Um diesen Nachteil zu vermeiden, ist es bekannt, in den elektrischen Strom oder in die elektrische Spannung bei geringen Drehzahlen ein Testsignal mit einer bestimmten Frequenz aufzuprägen. Die Frequenz liegt unterhalb der Schaltfrequenz des verwendeten Umrichters und ist meist größer als die Bandbreite des verwendeten Stromreglers. Nachteilig hierbei ist jedoch, dass diese Frequenz mit dem menschlichen Ohr wahrnehmbar ist, so dass ein unerwünschter akustischer Eindruck entsteht.

Aus der DE 10 2008 045 622 B4 ist ein Verfahren zum Betrieb einer stromrichtergespeisten geberlosen, nicht linearen, permanent erregten Synchronmaschine bekannt, bei dem in einem ersten Arbeitsschritt ein Polradwinkel geschätzt und ausgehend hiervon eine drehmomentbildende und eine flussbildende Komponente eines Statorstromvektors erfasst wird. Ferner wird ein elektrischer Spannungsvektor erfasst und hieraus mittels einer Recheneinrichtung eine Läuferkreisfrequenz berechnet, wofür auf eine in einer Recheneinrichtung hinterlegte Kurvenschar für einen Querfluss zurückgegriffen wird. In einem weiteren Arbeitsschritt wird ein Polradwinkel ausgehend von dem ermittelten Querfluss sowie den erfassten Stromwerten geschätzt, und dieser für die weitere Regelung herangezogen. Bei dem vorgeschlagenen Verfahren ist es daher erforderlich, die Kennfelder auf die aktuell betriebene Synchronmaschine anzupassen. Folglich muss zu jeder Synchronmaschine aufgrund von Fertigungstoleranzen bei der Montage stets das jeweilige Kennfelder ermittelt werden. Auch bei einer Reparatur und einer folglichen, wenn auch minimalen, Änderung der für die Ausbildung des Stator- bzw. Rotorflusses bildenden Komponenten, muss daher stets die Recheneinheit angepasst werden.

Aus DE 10 2013 222 075 A1 ist eine Vorrichtung und ein Verfahren zum Initialisieren eines Regelkreises für einen Strom zum Betrieb einer Synchronmaschine bekannt. Beim Übergang von einem gesteuerten Betrieb zu einem geregelten Betrieb wird unter Berücksichtigung einer Sollstromvorgabe für die Synchronmaschine und unter Berücksichtigung eines tatsächlichen Stroms zunächst ein integrativer Anteil des Regelkreises bestimmt. Ein Integrator des Regelkreises wird bei Beginn des geregelten Betriebs mit dem integrativen Anteil initialisiert.

In US 2007/0285047 ist eine Schaltung zur Verwendung der Vorzeichenwechsel einer Motorphase und der Gegen-EMK-Ströme einer Motorphase zur Steuerung von PWM offenbart. In einem Regelkreis wird eine Frequenzreferenz von einer Phasendetektorschaltung, welche die Frequenz eines festgestellten Nulldurchgangs eines Gegen-EMK-Wechsels misst, erhalten. Ein Fehler zwischen einer gewünschten Phasenverschiebung, d. h. von einer internen Referenz des Phasenverschiebungsoffsets kommend, und einer gemessenen Phasenverschiebung, d. h. von einer Phasendetektorschaltung kommend, wird verwendet, um die Frequenzreferenz eines PWM-Modulators zu ändern und sie für jede dynamische Änderung während des Arbeitszustands im Regelkreis anzupassen. Dieses Dokument weist alle Merkmale des Oberbegriffes des Anspruchs 1 auf.

GB 2489434 A zeigt einen Beobachter für Synchronmaschinen. Der Beobachter wird anhand eines Imaginärteils der Differenz zwischen einem realisierten und einem geschätzten emf-Vektor ermittelt. In Abhängigkeit von dem Beobachter wird zwischen einem geregelten und einem gesteuerten Betrieb umgeschaltet.

Der Erfindung liegt die Aufgabe zugrunde, ein besonders geeignetes Verfahren zum Betrieb einer elektrischen Maschine und einen besonders geeigneten Antrieb mit einer elektrischen Maschine anzugeben, bei denen insbesondere Herstellungskosten gesenkt und bei Betrieb eine Belastung von peripheren Geräten vermieden oder zumindest verringert ist.

Hinsichtlich des Verfahrens wird diese Aufgabe durch die Merkmale des Anspruchs 1 und hinsichtlich des Antriebs durch die Merkmale des Anspruchs 9 erfindungsgemäß gelöst. Vorteilhafte Weiterbildungen und Ausgestaltungen sind Gegenstand der jeweiligen Unteransprüche.

Das Verfahren dient dem Betrieb einer elektrischen Maschine, insbesondere einer geberlosen elektrischen Maschine. Mit anderen Worten umfasst die elektrische Maschine keinen Geber, mittels dessen eine Drehzahl oder aber eine Position eines Rotors der elektrischen Maschine bezüglich eines Stators der elektrischen Maschine erfassbar wäre. Mittels des Gebers würde hierbei die Position bzw. Drehzahl direkt gemessen werden, und nicht anhand von etwaigen anderen Messgrößen ermittelt werden. Insbesondere umfasst die elektrische Maschine keinen Hall-Sensor oder aber einen Sensor, mittels dessen eine Sinus- und eine Cosinus-Spur ausgegeben werden. Geeigneterweise umfasst die elektrische Maschine keinen Inkrementalgeber. Die elektrische Maschine ist beispielsweise ein Elektromotor, insbesondere eine Synchronmaschine. Vorzugsweise umfasst die elektrische Maschine eine Anzahl an Permanentmagneten. Die elektrische Maschine ist beispielsweise eine lineare oder eine nicht-lineare elektrische Maschine, insbesondere ein Synchronmotor.

Die elektrische Maschine wird zunächst gesteuert betrieben, also eine Führungsgröße vorgegeben. Eine Abweichung des tatsächlichen Zustands von der Führungsgröße wird im gesteuerten Betrieb nicht überwacht. Die Führungsgröße ist hierbei ein aktueller Winkel. Insbesondere ist dieser Winkel zwischen einem Rotor und einem Stator der elektrischen Maschine gebildet. Die Führungsgröße ist somit insbesondere der mechanisch von der elektrischen Maschine realisierte Winkel, der vorzugsweise zu dem elektrischen Winkel korrespondiert. Insbesondere entspricht der elektrische Winkel dem mechanischen Winkel. Der Winkel ist zweckmäßigerweise zeitlich verändert, so dass die Führungsgröße einer bestimmten vorgegebenen Drehzahl zuzüglich eines Phasenwerts oder eines Offsets entspricht. Mit anderen Worten wird die elektrische Maschine auf eine bestimmte Drehzahl gesteuert, wobei aufgrund des Offsets bzw. der Phase eine bestimmte Stellung des Rotors bezüglich des Stators zu einer bestimmten Zeit vorgegeben ist, also ein aktueller Winkel vorliegt. Zu einer späteren Zeit ist der vorgegebene aktuelle Winkel geändert, wobei sich die Änderung anhand der vorgegebenen Drehzahl ergibt.

Zu einem Zeitpunkt wird von dem gesteuerten zu einem geregelten Betrieb umgeschaltet. Im geregelten Betrieb wird ebenfalls eine Führungsgröße verwendet, die ebenfalls dem aktuellen Winkel entspricht, der zweckmäßigerweise anhand einer vorgegebenen Drehzahl und einem vorgegebenen Offset bzw. Phase bestimmt ist. Mit anderen Worten wird sowohl im gesteuerten als auch im geregelten Betrieb als Führungsgröße der jeweilige aktuelle Winkel herangezogen. Mit nochmals anderen Worten ist die Führungsgröße jeweils eine Sollgröße. Insbesondere wird die Führungsgröße dem jeweiligen Stellglied zugeführt. Zum Zeitpunkt der Umschaltung wird als Führungsgröße des geregelten Betriebs die Führungsgröße des gesteuerten Betriebs zuzüglich eines Korrekturwerts herangezogen. Mit anderen Worten wird zu dem Zeitpunkt nicht auf den aktuellen Winkel geregelt, auf den im gesteuerten Betrieb gesteuert wurde. Zusammenfassend wird als Führungsgröße des geregelten Betriebs zu dem Zeitpunkt die Führungsgröße des gesteuerten Betriebs zu dem Zeitpunkt zuzüglich eines Korrekturwerts herangezogen. Mittels des Korrekturwerts wird hierbei eine Abweichung der Winkelstellung im gesteuerten Betrieb von der Führungsgröße berücksichtigt, so dass bei dem Umschalten keine Sprünge innerhalb der Drehzahl zu erwarten sind. Insbesondere erfolgt die Ermittlung des Korrekturwerts nur einmal während des Verfahrens, nämlich dann, wenn von dem gesteuerten in den geregelten Betrieb umgeschaltet wird.

Zusammenfassend wird insbesondere für eine erste Zeitspanne die elektrische Maschine auf einen ersten Winkel gesteuert betrieben und für eine zweite Zeitspanne die elektrische Maschine auf einen zweiten Winkel geregelt betrieben, wobei als zweiter Winkel der erste Winkel zuzüglich des Korrekturwerts herangezogen wird. Der Winkel ist hierbei lediglich für den Zeitpunkt des Umschaltens gültig. Mit anderen Worten ist der erste Winkel vor dem Zeitpunkt des Umschaltens ein anderer als zum Zeitpunkt des Umschaltens. Ebenso ist der zweite Winkel zum Zeitpunkt des Umschaltens ein anderer als im weiteren zeitlichen Verlauf.

Unter gesteuertem Betrieb wird hierbei insbesondere verstanden, dass keine Abweichung zwischen der Führungsgröße des gesteuerten Betriebs und einer realisierten Größe ermittelt wird, oder dass zumindest eine derartige ermittelte Abweichung bei der weiteren Steuerung nicht berücksichtigt wird. Beispielsweise ist die tatsächlich realisierte Größe nicht bekannt. Eine beim gesteuerten Betrieb verwendete Stellgröße hingegen, die sich aus der Führungsgröße ergibt, wird vorzugsweise jedoch geregelt. Mit anderen Worten ist der Steuerung eine Regelung unterlagert. Bei der unterlagerten Regelung wird jedoch eine andere Größe herangezogen, die sich insbesondere von der Führungsgröße unterscheidet. Beispielsweise handelt es sich um eine andere physikalische Größe.

Insbesondere wird auf die Stellgröße des gesteuerten Betriebs geregelt. Mit anderen Worten wird beim geregelten Betrieb die Führungsgröße vorgegeben und hieraus eine Stellgröße abgeleitet. Auf eben diese Stellgröße wird im gesteuerten Betrieb geregelt. Mit anderen Worten wird die Stellgröße des gesteuerten Betriebs als zweite Führungsgröße einer unterlagerten Regelung herangezogen. Insbesondere ist die Totzeit bei der Regelung auf die Stellgröße im gesteuerten Betrieb geringer als die Totzeit des gesteuerten Betriebs auf die Führungsgröße. Insbesondere ist die Totzeit der Regelung auf die Stellgrößer kleiner oder gleich 50%, 10%, 5%, 2%, 1 %, 0,5% der Totzeit auf die Regelung auf die Führungsgröße im geregelten Betrieb. Mit anderen Worten ist eine Anpassung auf die Stellgröße vergleichsweise schnell durchführbar. Vorzugsweise wird im gesteuerten Betrieb eine Vorsteuerung herangezogen. Mittels dieser wird geeigneterweise eine Anpassung der Stellgröße durchgeführt, bevor diese insbesondere der Regelung zugeführt und/oder mittels der Regelung angepasst wird.

Insbesondere wird als Stellgröße des gesteuerten Betriebs ein elektrischer Strom herangezogen. Mit anderen Worten wird anhand der Führungsgröße im gesteuerten Betrieb ein elektrischer Strom ermittelt und auf diesen geregelt, unabhängig von der tatsächlichen Abweichung von der Führungsgröße, also unabhängig von der tatsächlichen Position des Rotors bezüglich des Stators, da als Führungsgrö-ße der Winkel verwendet wird. Zusammenfassend wird bei der Steuerung ein elektrischer Strom vorgegeben, und dieser folglich eingeprägt. Der elektrische Strom ist vergleichsweise einfach zu erfassen und eine Reglung ist daher vergleichsweise kostengünstig zu realisieren. Auch kann eine Anpassung des elektrischen Stroms aufgrund einer ermittelten Abweichung vergleichsweise schnell erfolgen. Insbesondere wird als Stellgröße ein Vektor des elektrischen Stroms, also ein elektrischer Stromvektor gewählt. Dieser wird beispielsweise mittels eines Betrags des elektrischen Stroms sowie einem hierzu korrespondierenden Winkel beschrieben, wobei der Winkel insbesondere gleich der Führungsgröße ist. Der elektrische Stromvektor wird zweckmäßigerweise in eine erste und eine zweite Komponente zerlegt, wobei die beiden Komponenten beispielsweise zueinander senkrecht sind. Insbesondere wird die zweite Komponente konstant gewählt. Mit anderen Worten wird eine fest vorgegebene zweite Komponente bestimmt, unabhängig von der tatsächlichen Belastung der elektrischen Maschine. Zweckmäßigerweise wird hierbei als zweite Komponente Null (0) gewählt. Auf diese Weise ist eine Berechnung vergleichsweise einfach durchführbar, da lediglich die erste Komponente als Stellgröße ermittelt werden muss. Zweckmäßigerweise wird die erste Komponente konstant gewählt. Insbesondere ist die erste Komponente stets positiv. Bei geeigneter Wahl der Führungsgröße ist folglich die Ermittlung der Stellgröße vergleichsweise einfach.

Insbesondere ist die erste Komponente eine flussbildende Komponente des elektrischen Stroms, und die zweite Komponente ist eine drehmomentbildende Komponente des elektrischen Stroms. Die beiden Komponenten sind hierbei fest vorgegeben und sind unabhängig von der tatsächlichen Belastung der elektrischen Maschine, also dem tatsächlich realisierten Fluss bzw. dem von der elektrischen Maschine tatsächlich aufgebrachten Drehmoment. Insbesondere wird als Stellgröße des gesteuerten Betriebs der elektrische Strom mit der flussbildenden und der drehmomentbildenden Komponente herangezogen, wobei die drehmomentbildende Komponente insbesondere gleich Null gewählt wird. Die flussbildende und die drehmomentbildende Komponente beschreiben hierbei insbesondere den Stromvektor in einem mit der Führungsgröße bewegten Koordinatensystem, da als Führungsgröße des gesteuerten Betriebs der Winkel herangezogen wird. Der tatsächlich realisierte Fluss bzw. das Drehmoment sind jedoch unabhängig von den beiden Komponenten, da im gesteuerten Betrieb der tatsächlich realisierte Winkel von dem vorgegebenen Winkel, der Führungsgröße, abweichen kann, und diese Abweichung insbesondere nicht bekannt ist, zumindest jedoch bei der Steuerung nicht berücksichtigt wird.

Zweckmäßigerweise wird bei der Regelung auf die Stellgröße des gesteuerten Betriebs die Abweichung erfasst. Mit anderen Worten wird erfasst, inwiefern sich die Stellgröße von dem tatsächlich realisierten Istwert unterscheidet, also der Regelgröße. Dies wird als Regelabweichung herangezogen. Zur Bestimmung der Regelabweichung geht jedoch nicht die Führungsgröße selbst ein, sondern lediglich die Werte der der Steuerung auf die Führungsgröße unterlagerten Regelung. Anhand der Regelabweichung wird der Korrekturwert ermittelt. Mit anderen Worten wird die Regelabweichung zur Bestimmung des Korrekturwerts herangezogen. Hierbei wird davon ausgegangen, dass die tatsächliche Position der elektrischen Maschine der Führungsgröße im gesteuerten Betrieb entspricht, und Abweichungen hiervon lediglich aufgrund der Regelung auf die Stellgröße entstehen, oder aber dass sich Abweichungen bei der Regelung auf die Stellgröße ergeben. Infolgedessen ist aufgrund der unterlagerten Regelung die Ermittlung des Korrekturwerts ermöglicht.

Beispielsweise wird ein P-Anteil der Regelung herangezogen. Vorzugsweise jedoch wird der I-Anteil der Regelung als Regelabweichung herangezogen. Zumindest jedoch weist die Regelabweichung einen I-Anteil auf und beispielsweise einen P-Anteil und/oder einen D-Anteil. Mit anderen Worten wird eine aktuelle Abweichung der Regelung auf die Stellgröße zu bestimmten Zeiten ermittelt, der dem P-Anteil entspricht oder zu diesem proportional ist. Diese ermittelten Abweichungen werden über einen bestimmten Zeitraum integriert und beispielsweise mit einem Faktor multipliziert. Sofern lediglich diskrete Werte vorhanden sind, werden diese zweckmäßigerweise addiert. Folglich wird der zeitliche Verlauf der Abweichung von der Stellgröße ermittelt und zur Bestimmung des Korrekturfaktors herangezogen. Auf diese Weise ist das vorgeschlagene Verfahren im Wesentlichen unabhängig von der tatsächlichen Ausgestaltung der elektrischen Maschine, so dass kein genaues Wissen um die elektrische Maschine und deren Aufbau vorhanden sein muss. Mit anderen Worten ist ein Wissen um den Aufbau der elektrischen Maschine nicht erforderlich; es muss lediglich der I-Anteil der Regelung auf die Stellgröße erfasst werden, um den Korrekturwert zu ermitteln.

Zweckmäßigerweise umfasst der Korrekturwert als Bestandteil den Arcus-Tangens aus einem Quotienten, wobei als Zähler vorzugsweise der I-Anteil der Regelung auf die erste Komponente ist. Als Nenner wird insbesondere die Summe aus dem I-Anteil der zweiten Komponente und der Gegen-Elektromotorischen Kraft der elektrischen Maschine herangezogen. Der I-Anteil der zweiten Komponente ist diejenige Regelabweichung, die zur Regelung auf die vorgegebene Stellgröße hinsichtlich der zweiten Komponente des elektrischen Stroms herangezogen wird. Sofern die zweite Komponente gleich null gewählt wird, wird folglich derjenige Teil als Regelabweichung herangezogen, der die aktuell realisierte zweite Komponente auf null zurückführen würde. Die Gegen-Elektromotorische Kraft der elektrischen Maschine ist insbesondere proportional zu derjenigen elektrischen Spannung, die sich bei Betrieb der elektrischen Maschine entgegen der Betriebsspannung aufbaut. Insbesondere ist die Gegen-Elektromotorische Kraft gleich dem Produkt aus dem Fluss der elektrischen Maschine und deren Drehzahl, also ψω. Der Fluss ist beispielsweise der Läufer- oder der Rotorfluss.

Zusammenfassend umfasst der Korrekturwert (atan (IA_{d} / IA_{q} + EMK)) und geeigneterweise (atan (IA_{d} / IA_{q} + ψω)). Insbesondere besteht der Korrekturwert aus (atan (IA_{d} / IA_{q} + EMK)) bzw. (atan (IA_{d} / IA_{q} + ψω)). "atan" bezeichnet hierbei die Arcus-Tangens-Funktion.

Besonders bevorzugt wird anstatt des Arcus -Tangens der Atan2 herangezogen. Mit anderen Worten umfasst der Korrekturwert bzw. besteht der Korrekturwert aus atan2((IA_{d} / IA_{q} + EMK) bzw. atan2 (IA_{d} / IA_{q} + ψω).

Der atan2 (y,x) ist
- atan y/x; falls x > 0
- atan y/x + π; falls y ≥ 0 und x ≤ 0
- atan y/x - π; falls y < 0 und x < 0
- π/2; falls y > 0 und x = 0
- -π/2; falls y < 0, x = 0
- 0; sonst.

Auf diese Weise ist eine korrekte Zuordnung des Korrekturwerts in Abhängigkeit der Vorzeichen der jeweiligen I-Anteile ermöglicht.

Zweckmäßigerweise wird im geregelten Betrieb als Stellgröße eine elektrische Spannung herangezogen. Zweckmäßigerweise wird hierbei bei geregeltem Betrieb eine feldorientierte Regelung herangezogen. Mit anderen Worten wird bei der feldorientierten Regelung im geregelten Betrieb die elektrische Spannung als Raumzeiger ermittelt, und die elektrische Maschine entsprechend der Raumzeigerdarstellung der elektrischen Spannung angesteuert und hierauf geregelt. Die elektrische Spannung ist in einer vergleichsweise kurzen Zeitspanne einstellbar, so dass die Regelgüte im geregelten Betrieb aufgrund der geringen Totzeit vergleichsweise hoch ist. Mit anderen Worten wird anhand der Führungsgröße im geregelten Betrieb als Stellgröße die elektrische Spannung ermittelt. Die elektrische Spannung ist vergleichsweise einfach einstellbar, falls beispielsweise ein Umrichter zu Bestromung der elektrischen Maschine herangezogen wird. Insbesondere weist der Umrichter eine Brückenschaltung auf, beispielsweise eine B4- oder B6-Schaltung.

Zweckmäßigerweise wird unterhalb einer Drehzahlgrenze der gesteuerte Betrieb herangezogen, und insbesondere oberhalb der Drehzahlgrenze der geregelte Betrieb. Zweckmäßigerweise wird zwischen einem Stillstand der elektrischen Maschine und der Drehzahlgrenze der gesteuerte Betrieb und oberhalb der Drehzahlgrenze der geregelte Betrieb herangezogen. Die Drehzahlgrenze ist hierbei zweckmäßigerweise vorzeichenlos. Mit anderen Worten wird unabhängig von der Drehrichtung bis zu einem bestimmten Betrag der Geschwindigkeit der elektrischen Maschine, nämlich der Drehzahlgrenze, der gesteuerte Betrieb herangezogen. Zweckmäßigerweise entspricht die Drehzahlgrenze einem Wert, der zwischen 5% und 20% der Nenndrehzahl oder Maximaldrehzahl der elektrischen Maschine liegt. Insbesondere ist der Wert zwischen 7% und 15% und geeigneterweise im Wesentlichen gleich 10%. Beispielsweise ist die Drehzahlgrenze zwischen 300 U/min und 900 U/min, zwischen 400 U/min und 800 U/min, zwischen 500 U/min und 700 U/min und zweckmäßigerweise gleich 600 U/min.

Zusammenfassend wird im gesteuerten Betrieb die Führungsgröße insbesondere nicht adaptiert, also ein Polradwinkel nicht adaptiert. Der Polradwinkel wird zweckmäßigerweise lediglich aufgrund einer Sollfrequenz vorgegeben, die insbesondere zu einer gewünschten Drehzahl korrespondiert. Als Stellgröße wird der elektrische Stromvektor, insbesondere der Stromzeiger des Statorstroms, herangezogen. Der tatsächlich realisierte Winkel des Rotors hingegen ist nicht bekannt, wobei der Winkel aufgrund des mit einer zur Drehzahl korrespondierenden Frequenz drehenden Stromzeigers hervorgerufen wird. Der drehende Stromzeiger selbst weist vorzugsweise eine konstante Amplitude auf, und wird eingeprägt. Zusammenfassend folgt der Rotor dem Stromzeiger mit derselben Frequenz.

Der Korrekturwert wird berechnet, insbesondere mittels eines Spannungsmodels, wofür beispielsweise ein gemessener elektrischer Strom, eine gemessene elektrische Spannung und/oder ein Motormodell herangezogen werden. Insbesondere erfolgt die Berechnung des Korrekturwerts, der vorzugsweise die Abweichung der Führungsgröße des gesteuerten Betriebs von dem tatsächlich von dem Rotor realisierten Winkel ist, anhand von gemessenen elektrischen Strömen, anhand von gemessenen elektrischen Spannungen und anhand des Motormodells. Im geregelten Betrieb wird vorzugsweise anhand von gemessenen elektrischen Strömen, anhand von gemessenen elektrischen Spannungen und/oder anhand des Motormodells ein Winkel (Polradwinkel) berechnet. Dieser wird insbesondere benötigt, um eine feldorientierte Regelung durchzuführen, bei welcher aus der Solldrehzahl ein Sollstrom berechnet wird.

Zusammenfassend ist im gesteuerten Betrieb der Polradwinkel nicht bekannt. Der vorgegebene mechanische Winkel, der insbesondere dem elektrischen Winkel entspricht, stimmt nicht mit dem tatsächlichen Polradwinkel überein. Während des gesteuerten Betriebs ist der tatsächliche Polradwinkel nicht bekannt, der Rotor folgt dem elektrischen Feld. Im gesteuerten Betrieb erfolgt vorzugsweise lediglich eine Stromregelung, jedoch keine Drehzahlregelung. Anhand der Drehzahl wird die elektrische Frequenz des Stromzeigers vorgegeben.

Der Unterschied zwischen dem gesteuerten und dem geregelten Betrieb ist, dass keine Rückführung des tatsächlich realisierten Werts (Istwert) erfolgt. Im gesteuerten Betrieb wird kein tatsächlich realisierter Winkel ermittelt, da als Führungsgröße der Winkel herangezogen wird. Um beim Übergang zwischen dem gesteuerten und dem geregelten Betrieb sofort die richtige Orientierung für den geregelten Betrieb zu erhalten, wird die Differenz des vorgegebenen mechanischen Winkels zum tatsächlichen Polradwinkel ermittelt.

Zusammenfassend findet im geregelten Betrieb eine Vorsteuerung statt, bei der angenommen wird, dass der eingeprägte Stromzeiger in der d-Achse liegt, die parallel zur ersten (flussbildenden) Komponente ist. Folglich wird angenommen, dass der eingeprägte Stromzeiger lediglich einen flussbildenden Anteil aufweist. Dadurch, dass der Stromzeiger jedoch einen momentenbildenden Anteil hat, entsteht eine Abweichung zwischen der Vorsteuerung und der Stromregelung, welche sich in den I-Anteilen der Stromregler widerspiegelt. Diese Abweichung wird zur Ermittlung des Korrekturwerts herangezogen. Mittels der Vorsteuerung wird zweckmäßigerweise eine elektrische Spannung ermittelt.

Der Antrieb umfasst eine elektrische Maschine und einen Umrichter, wobei der Umrichter vorgesehen und eingerichtet ist, die elektrische Maschine zu bestromen. Insbesondere sind die elektrische Maschine und der Umrichter miteinander elektrisch kontaktiert. Die elektrische Maschine ist zweckmäßigerweise geberlos, was die Herstellungskosten des Antriebs reduziert. Insbesondere ist die elektrische Maschine eine Synchronmaschine. Bei Betrieb des Antriebs wird zu einem Zeitpunkt von einem gesteuerten Betrieb zu einem geregelten Betrieb umgeschaltet. Zum Zeitpunkt der Umschaltung wird als Führungsgröße des geregelten Betriebs die Führungsgröße des gesteuerten Betriebs zuzüglich eines Korrekturwerts herangezogen. Geeigneterweise wird als Führungsgröße ein Winkel der elektrischen Maschine, insbesondere ein Polradwinkel, herangezogen. Zweckmäßigerweise erfolgt im gesteuerten Betrieb eine Regelung auf den elektrischen Strom, mittels dessen die elektrische Maschine betrieben wird. Geeigneterweise wird sowohl im gesteuerten, als auch im geregelten Betrieb der Umrichter geregelt betrieben, also dessen Ausgabespannung oder Ausgabestrom im Wesentlichen kontinuierlich überwacht und mit einer Vorgabe verglichen. Insbesondere wird lediglich im gesteuerten Betrieb die elektrische Maschine gesteuert und im geregelten Betrieb die elektrische Maschine geregelt betrieben. Beispielsweise ist der Antrieb einer Industrieanlage, insbesondere ein Bestandteil einer Extrudermaschine, die zweckmäßigerweise innerhalb einer Kunststoff verarbeitenden Industrieanlage eingesetzt wird.

Der Antrieb umfasst beispielsweise eine Vorsteuerung, mittels derer im gesteuerten Betrieb die elektrische Maschine betrieben wird. Mittels der Vorsteuerung wird beispielsweise ein zu einem bestimmten Winkel korrespondierender Stromvektor errechnet und der Umrichter derart angesteuert, dass ein derartiger Stromvektor erstellt ist. Mit anderen Worten wird mittels der Vorsteuerung aus der Führungsgröße die Stellgröße berechnet und der Umrichter entsprechend der Stellgröße angesteuert. Insbesondere wird der Umrichter hierbei auf die Stellgröße geregelt. Zweckmäßigerweise umfasst der Antrieb einen I-Regler und geeigneterweise einen PI-Regler. Mittels des Reglers wird beispielsweise auf die Stellgröße des gesteuerten Betriebs geregelt. Insbesondere wird mittels des I- bzw. PI-Reglers auf einen vorgegebenen elektrischen Strom geregelt.

Nachfolgend wird die Erfindung anhand einer Zeichnung näher erläutert. Darin zeigen:
- Fig. 1: ein Verfahren zum Betrieb einer elektrischen Maschine,
- Fig. 2: einen Ausschnitt des Verfahrens,
- Fig. 3: eine Stellgröße,
- Fig. 4: einen Antrieb mit der elektrischen Maschine in einem gesteuerten Betrieb,
- Fig. 5: Führungsgrößen zum Zeitpunkt des Umschaltens von dem gesteuerten Betrieb zu einem geregelten Betrieb, und
- Fig. 6: den Antrieb mit der elektrischen Maschine in dem geregelten Betrieb.

Einander entsprechende Teile sind in allen Figuren mit den gleichen Bezugszeichen versehen.

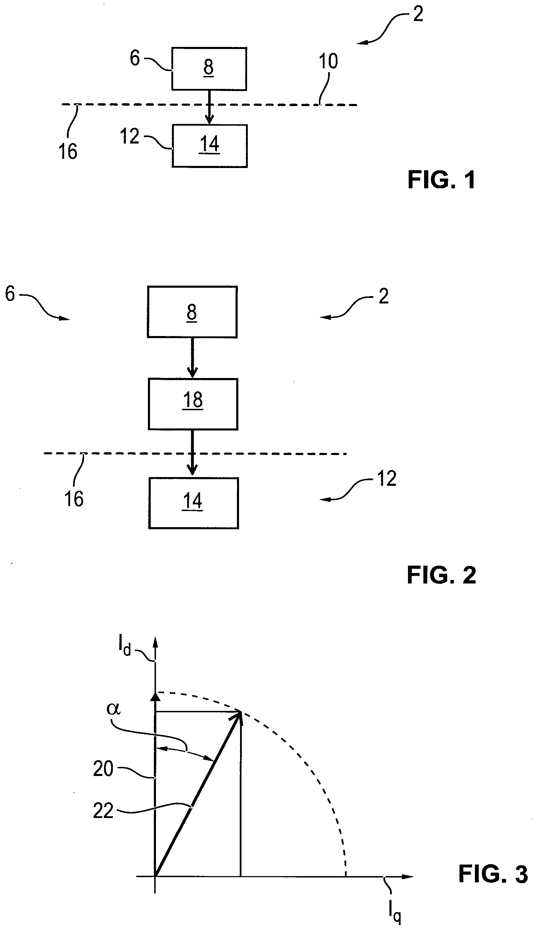

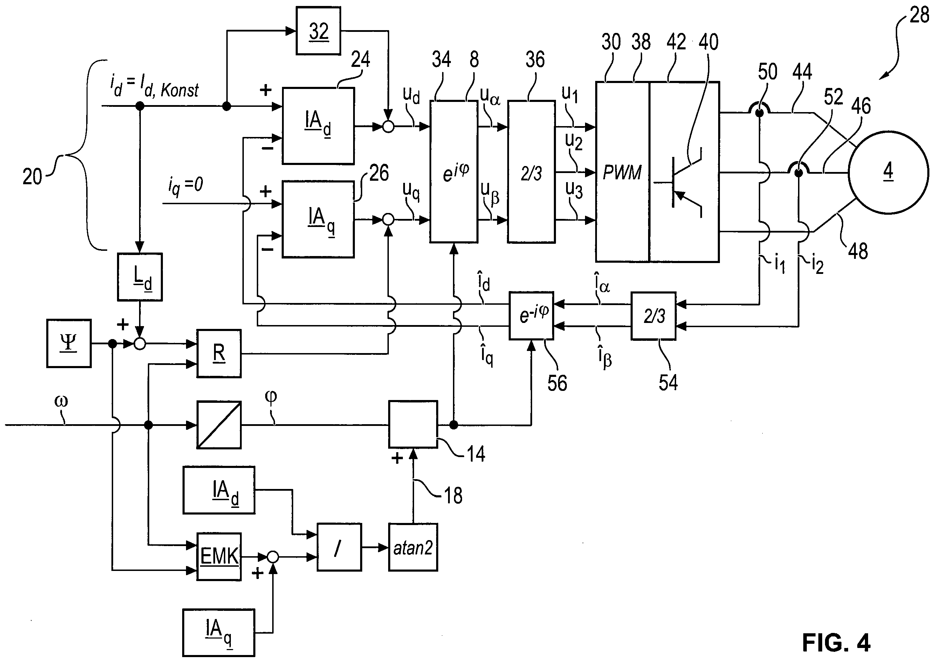

In Fig. 1 ist schematisch vereinfacht ein Verfahren 2 zum Betrieb einer in Fig. 4 dargestellten elektrischen Maschine 4 gezeigt. Die elektrische Maschine 4 ist eine geberlose Synchronmaschine. Das Verfahren sieht vor, dass zunächst ein gesteuerter Betrieb 6 herangezogen wird. Mit anderen Worten wird zunächst die elektrische Maschine gesteuert betrieben. Im gesteuerten Betrieb 6 wird eine Führungsgröße 8 herangezogen. Mit anderen Worten wird im gesteuerten Betrieb 6 die Führungsgröße 8 vorgegeben und die elektrische Maschine 4 darauf gesteuert. Die Führungsgröße 8 ist hierbei ein aktueller Winkel ϕ. Der aktuelle Winkel ϕ ist hierbei zeitlich veränderlich, so dass mittels der elektrischen Maschine 4 eine bestimmte Drehzahl ω realisiert wird. Hierbei ist aufgrund der Vorgabe des aktuellen Winkels ϕ die Position der elektrischen Maschine 4 stets genau vorgegeben, so dass ein mittels der elektrischen Maschine 4 angetriebenes Bauteil an einer bestimmten Stelle positioniert werden kann.

Der gesteuerte Betrieb 6 wird nach einem Stillstand der elektrischen Maschine 4 bis zu einer Drehzahlgrenze 10 herangezogen. Mit anderen Worten wird bis die Drehzahl ω der Drehzahlgrenze 10 entspricht, die elektrische Maschine 4 gesteuerte betrieben. Sobald die die Drehzahlgrenze 10 erreicht wird, wird ein geregelter Betrieb 12 herangezogen. Mit anderen Worten wird die elektrische Maschine 4 auf eine Führungsgröße 14 geregelt. Die Führungsgröße 14 des geregelten Betriebs 12 ist ebenfalls der aktuelle Winkel ϕ, der auch zeitlich veränderlich ist. Zusammenfassend wird sowohl im gesteuerten als auch im geregelten Betrieb als jeweilige Führungsgröße 8,14 der aktuelle Winkel ϕ vorgegeben, der zeitlich veränderlich ist. Hierbei wird lediglich im geregelten Betrieb 12 eine Abweichung zwischen der Führungsgröße 14 und der tatsächlichen Position der elektrischen Maschine 4 ermittelt. Mittels der Drehzahlgrenze 10 ist ein Zeitpunkt 16 vorgegeben, bei dem von dem gesteuerten Betrieb 6 zum geregelten Betrieb 12 umgeschaltet wird.

In Fig. 2 ist das Verfahren 2 zum Zeitpunkt 16 verfeinert dargestellt. Im gesteuerten Betrieb 6 wird zunächst die Führungsgröße 8 des gesteuerten Betriebs 6 festgehalten und ein Korrekturwert 18 ermittelt. Sobald auf den geregelten Betrieb 12 umgeschaltet wird, wird die Führungsgröße 14 des geregelten Betriebs 12 ermittelt, die die Führungsgröße 8 des gesteuerten Betriebs 6 zuzüglich des Korrekturwerts 18 ist. Mit anderen Worten wird, sobald von dem gesteuerten auf den geregelten Betrieb 6,12 umgeschaltet wird, auf die Führungsgröße 8 des gesteuerten Betriebs 6 zuzüglich des Korrekturwerts 18 geregelt. Mit anderen Worten wird nicht auf den vor dem Zeitpunkt 16 aktuellen Winkel ϕ, der vorgegeben ist, geregelt, sondern auf den aktuellen Winkel ϕ, der um den Korrekturwert 18 bereinigt ist. Auf diese Weise ist der Übergang zwischen dem gesteuerten Betrieb 6 unter den geregelten Betrieb 18 verbessert.

Im gesteuerten Betrieb 6 wird anhand der Führungsgröße 6 eine Stellgröße 20 ermittelt, auf die geregelt wird. Die Stellgröße 20 ist ein elektrischer Strom, der eine zweite Komponente I_{q} und erste Komponente I_{d} aufweist. Mit anderen Worten ist die Stellgröße 20 ein Stromvektor, wobei die Ausrichtung des Stromvektors bezüglich eines ortsfesten Koordinatensystems dem aktuellen Winkel ϕ entspricht. Die zweite Komponente I_{q} wird hierbei gleich 0 gewählt; folglich ist I_{q} = 0 bei der Stellgröße 20. Es wird nämlich davon ausgegangen, dass bei einem Anfahren der elektrischen Maschine 4 lediglich ein geringes Drehmoment aufgebracht wird.

In Fig. 3 ist ferner ein realisierter Stromvektor 22 dargestellt, der um einen Abweichungswinkel α bezüglich der Stellgröße 20 verschoben ist. Mit anderen Worten weist der realisierte Stromvektor 22 eine zweite Komponente I_{q} auf, und die erste Komponente I_{d} ist reduziert. Mittels eines ersten Reglers 24, der in Fig. 4 gezeigt ist, wird im gesteuerten Betrieb 6 die erste Komponente I_{d} auf die Vorgabe der Stellgröße 20 und mittels eines zweiten Reglers 26 die zweite Komponente I_{q} auf null geregelt. Mit anderen Worten wird im gesteuerten Betrieb 6 der realisierte Stromvektor 22 auf die Stellgröße 20 geregelt.

In Fig. 4 ist in einem Blockdiagramm ein Antrieb 28 mit der elektrischen Maschine 4 sowie einem Umrichter 30 dargestellt, wobei mittels des Antriebs 28 eine Extrudermaschine innerhalb einer Kunststoff verarbeitenden Industrieanlage angetrieben wird. Im gesteuerten Betrieb 6 wird die Führungsgröße 8 vorgegeben, die dem aktuellen Winkel ϕ entspricht. Hieraus wird die Stellgröße 20 berechnet, bei der die zweite Komponente I_{q} null und als erste Komponenten I_{d} ein konstanter Wert gewählt wird. Dieser Wert wird einer Vorsteuerung 32 zugeleitet, und hieraus eine erste Spannungskomponente u_{d} berechnet. Aus der zweiten Komponente I_{q} wird eine zweite Spannungskomponente u_{q} berechnet und diese einem ersten Vektorermittlungsmodul 34 zugeleitet. Die beiden Spannungskomponenten u_{d}, u_{q} korrespondieren hierbei zu den jeweiligen Komponenten des elektrischen Stroms I_{d}, l_{q}.

Mittels des ersten Vektorermittlungsmoduls 34 werden die beiden Spannungskomponenten u_{d}, u_{q} in eine dritte und vierte Spannungskomponente u_{α}, u_{β} transformiert. Die erste und zweite Spannungskomponente u_{d}, u_{q} bezeichnen die Komponenten der elektrischen Spannung in einem mit einem Läufer der elektrischen Maschine 4 rotierenden Bezugssystem, wohingegen die dritte und vierte Spannungskomponente u_{α}, u_{β} denselben elektrischen Spannungsvektor bezeichnen, jedoch in einem ortsfesten Koordinatensystem. Mit anderen Worten ist die erste und zweite Spannungskomponente u_{d}, u_{q} zunächst konstant, wohingegen die dritte und vierte Spannungskomponente u_{α}, u_{β} zeitlich veränderlich ist, nämlich in Abhängigkeit des jeweiligen aktuellen Winkels ϕ. Folglich wird bei Ermittlung der dritten und vierten Spannungskomponente u_{α}, u_{β} der aktuelle Winkel ϕ berücksichtigt, auf den als Führungsgröße 8 gesteuert wird.

Die dritte und vierte Spannungskomponente u_{α}, u_{β} werden einem ersten Modul 36 zugeleitet, mittels dessen eine erste Phasenspannung u₁, eine zweite Phasenspannung u₂ und eine dritte Phasenspannung us ermittelt wird. Die Phasenspannungen u₁, u₂, u₃ entsprechen denjenigen Werten für die elektrische Spannung, mittels derer die jeweiligen Phasen der elektrischen Maschine 4 beaufschlagt werden sollen. Die erste, zweite, dritte Phasenspannung u₁, u₂, us werden dem Umrichter 30 zugeleitet, und zwar einem Treibermodul 38, mittels dessen Treibersignale für Halbleiterschalter 40 einer Brückenschaltung 42 erstellt werden. Die Halbleiterschalter 40 sind Leistungsleiterschalter, beispielsweise IGBTs, deren jeweiliger Steuereingang eben mittels der Treiberschaltung beaufschlagt ist. Mit anderen Worten ist das jeweilige Gate mit der Treiberschaltung 38 elektrisch kontaktiert. Die Brückenschaltung 42 selbst ist eine B6-Schaltung, die ausgangsseitig eine erste Phase 44, eine zweite Phase 46 und eine dritte Phase 48 aufweist. Die erste Phase 44 ist gegen eine nicht näher dargestellte erste Phase der elektrischen Maschine 4, die zweite Phase 46 gegen eine nicht näher dargestellte zweite Phase der elektrischen Maschine 4 und die dritte Phase 48 gegen eine nicht näher dargestellte dritte Phase der elektrischen Maschine 4 elektrisch geführt. Mittels der Phasen 44,46,48 wird somit ein elektromagnetisches Drehfeld erzeugt, so dass ein Läufer der elektrischen Maschine 4 mit der Drehgeschwindigkeit des Feldes rotiert.

Der ersten Phase 44 ist ein erster Stromsensor 50 und der zweiten Phase 46 ein zweiter Stromsensor 52 zugeordnet, mittels derer der in der ersten Phase 44 fließende elektrische Strom I₁ bzw. der in der zweiten elektrischen Phase 46 fließende zweite elektrische Strom I₂ erfasst wird. Die beiden Messwerte werden einem zweiten Modul 54 zugeleitet, mittels dessen ein gemessener Stromvektor mit einer gemessen dritte Stromkomponente Î_{α} und eine gemessene vierte Stromkomponente Î_{β} ermittelt wird, wobei der auf diese Weise gemessene Stromvektor in einem ortsfesten Koordinatensystem beschrieben ist. Dieser gemessene Stromvektor wird einem zweiten Vektorermittlungsmodul 56 zugeleitet, mittels dessen der gemessene Stromvektor in ein bezüglich des Läufers der elektrischen Maschine 4 statisches Koordinatensystem transformiert wird. Hierfür wird der gemessene Stromvektor in eine gemessene zweite Stromkomponente Î_{q} und eine gemessene erste Stromkomponente Î_{d} aufgeteilt. Folglich wird der in Fig. 3 gezeigte Abweichungswinkel α ermittelt.

Die beiden gemessenen Stromkomponenten Î_{q}, Î_{d} werden dem ersten Regler 24 bzw. dem zweiten Regler 26 zugeleitet. Die beiden Werte Î_{q}, Î_{d} werden mit der Vorgabe, nämlich dem verwendeten zweiten Komponente I_{q} bzw. der ersten Komponente I_{d} verglichen und hieraus jeweils eine Regelabweichung IA_{d} bzw. IA_{q} ermittelt. Anhand dieser Regelabweichung IA_{d} bzw. IA_{q} sowie der vorgegebenen zweiten Komponente I_{q} und ersten Komponente I_{d} wird erneut die erste und zweite Spannungskomponente u_{d}, u_{q} ermittelt und folglich die Bestromung der elektrischen Maschine 4 verändert. Die Regelabweichung IA_{d}, IA_{q} umfasst stets die aktuelle Abweichung zwischen der gemessenen ersten Stromkomponente Î_{d} und der ersten Komponente I_{d} bzw. der gemessenen zweiten Stromkomponente Î_{q} und der zweiten Komponente I_{q} als auch bereits realisierte Abweichungen. Mit anderen Worten sind sowohl der erste als auch der zweite Regler 24,26 PI-Regler, und ermitteln folglich sowohl einen P-Anteil als auch einen I-Anteil, wobei der I-Anteil den integrierten Fehler, also die integrierten Abweichungen zwischen der jeweiligen aktuellen Stellgröße 20 und dem realisierten Stromvektor entspricht.

Solange der gesteuerte Betrieb 6 andauert, wird die Stellgröße 20 aufgrund der Führungsgröße 8 ermittelt und mittels der beiden Regler 24,26 sowie der Vorsteuerung 32 der Umrichter 30 zur Ausgabe des ersten, zweiten, dritten elektrischen Stroms I₁, I₂, I₃ angesteuert.

Wenn auf den geregelten Betrieb 12 umgeschaltet wird, wird ein Fluss ψ der elektrischen Maschine 4 bestimmt, beispielsweise wird der Wert aus einer Tabelle abgerufen. Der Fluss ψ ist beispielsweise der Statorfluss oder aber der Rotorfluss der elektrischen Maschine 4. Dieser wird mit der vorgegebenen Drehzahl ω zur Erstellung einer Gegen-Elektromotorischen Kraft EMK multipliziert. Die Gegen-Elektromotorische Kraft EMK wird zu der zur zweiten Komponente I_{q} korrespondierenden Regelabweichung IA_{q} hinzuaddiert, wofür der aktuelle Wert hierfür von dem zweiten Regler 26 abgefragt wird. Auch wird der aktuelle Wert der zur ersten Komponente I_{d} korrespondierenden Regelabweichung IA_{d} von dem ersten Regler 24 abgefragt. Die beiden auf diese Weise ermittelten Werte werden als Eingabe einer Atan2-Funktion verwendet. Der auf diese Weise ermittelte Winkel ist der Korrekturwert 18. Zusammenfassend ist der Korrekturwert 18 gleich atan2(IA_{d}/ (IA_{q}+ EMK)). Der Korrekturwert 18 wird zu der aus der vorgegebenen Drehzahl ω ermittelten aktuellen Winkel ϕ hinzuaddiert, und dies als Führungsgröße 14 des geregelten Betriebs 12 zu dem Zeitpunkt 16 herangezogen.

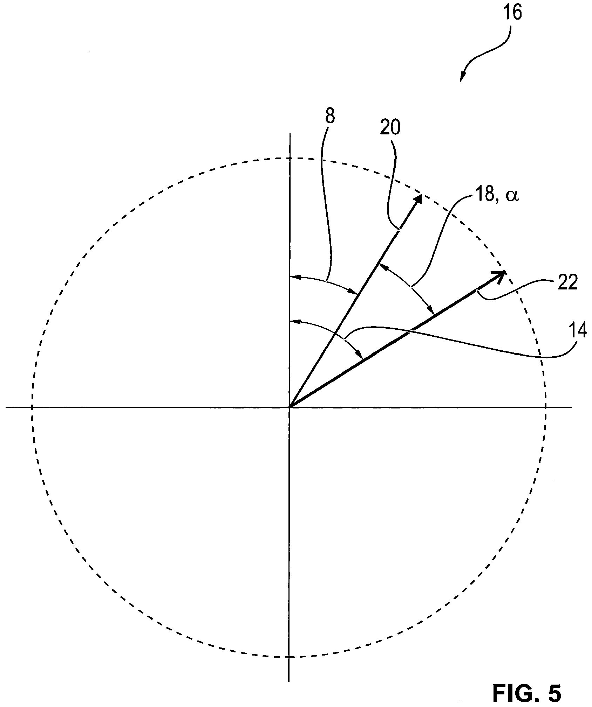

In Fig. 5 ist nochmals die Ermittlung der Führungsgröße 14 des geregelten Betriebs 12 zu dem Zeitpunkt 16 dargestellt. Im gesteuerten Betrieb 6 wird ausgehend von der Führungsgröße 8 des gesteuerten Betriebs 6 die Stellgröße 20 ermittelt. Der realisierte Stromvektor 22, der zur tatsächlichen Stellung des Rotors bezüglich des Stators korrespondiert, ist zu der Stellgröße 20 um den Abweichungswinkel α verschoben. Zum Zeitpunkt 16 des Umschaltens wird der mittels des realisierten Stromvektors 22 realisierte Winkel als die Führungsgröße 14 des geregelten Betriebs 12 herangezogen, also die Führungsgröße 8 des gesteuerten Betriebs 6 zuzüglich des Abweichungswinkel α, der den Korrekturwert 18 darstellt.

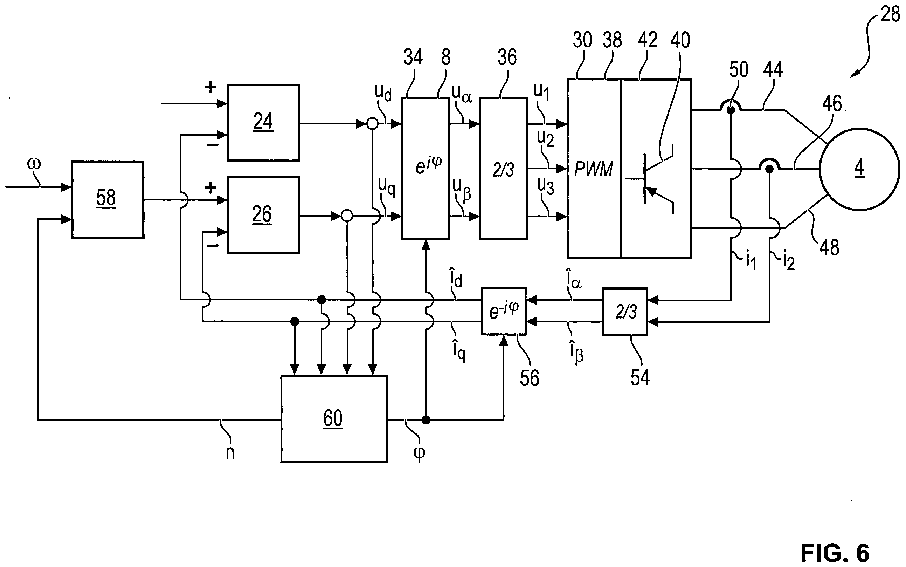

Im geregelten Betrieb 12 selbst, der in Fig. 6 gezeigt ist, wird die erste Spannungskomponente u_{d} anhand des Widerstands der elektrischen Maschine 4 multipliziert mit der ersten Komponente I_{d} abzüglich des Produkts aus der Drehzahl ω, einer zweiten Induktivität L_{q} und der zweiten Komponente I_{q} ermittelt. Mit anderen Worten ist u_{d} = r · I_{d} - ωL_{q} I_{q}. Die zweite Spannungskomponente u_{q} wird ermittelt, indem ein elektrische Widerstand R der elektrischen Maschine 4 mit der zweiten Komponente I_{q} multipliziert wird, und hierzu das Produkt aus der Drehzahl ω, einer ersten Induktivität L_{d} und der ersten Komponente I_{d} addiert wird. Die Ermittlung erfolgt mittels eines Drehzahlreglers 58 und einem Motormodell 60. Dem Motormodell 60 wird hierbei die erste Spannungskomponente u_{d}, die zweite Spannungskomponente u_{q}, die gemessene zweite Stromkomponente Î_{q} und die gemessene erste Stromkomponente Î_{d} zugeführt und hieraus der aktuellen Winkel ϕ ermittelt, der zur Ermittlung der dritte Spannungskomponente u_{α}, der vierte Spannungskomponente u_{β}, der gemessene zweite Stromkomponente Î_{q} und der gemessene erste Stromkomponente Î_{d} mittels des ersten und zweiten Vektorermittlungsmoduls 34, 56 verwendet wird. Auch wird eine Istdrehzahl n ermittelt und dem Drehzahlregler 58 zugeführt. Mittels des Drehzahlreglers 58 wird die Istdrehzahl n mit der Drehzahl ω verglichen und ausgehend von dieser Differenz die Bestromung der elektrischen Maschine 4 angepasst.

Zusammenfassend wird bei Drehzahlen unterhalb der Drehzahlgrenze 10 der elektrische Strom vorgegeben, indem dessen Betrag konstant gewählt wird und eine zur gewünschten Drehzahl ω der elektrischen Maschine 4 korrespondierende Frequenz gewählt wird. Dieser wird folglich eingeprägt, wobei die zweite Komponente I_{q} = 0 gewählt wird. Die Abweichung zwischen dem realisierten und den eingeprägten Stromkomponenten I_{d}, I_{q}, Î_{d}, Î_{q} wird zur Ermittlung des Abweichungswinkels α herangezogen und beim Übergang vom gesteuerten Betrieb 6 zum geregelten Betrieb 12 zu den beim gesteuerten Betrieb 6 verwendeten aktuellen Winkel ϕ hinzuaddiert, so dass zum Zeitpunkt 16 folglich die Führungsgröße 14 des geregelten Betriebs 12 der aktuellen Position der elektrischen Maschine 4 entspricht. Insbesondere erfolgt die Ermittlung des Korrekturwerts 18 nur einmal während des Verfahrens 2, nämlich dann, wenn von dem gesteuerten in den geregelten Betrieb 6, 12 umgeschaltet wird.

## Patentansprüche

1. Verfahren (2) zum Betrieb einer elektrischen Maschine (4), insbesondere einer geberlosen Synchronmaschine, bei dem zu einem Zeitpunkt (16) von einem gesteuerten Betrieb (6) zu einem geregelten Betrieb (12) umgeschaltet wird, wobei die elektrische Maschine (4) während des gesteuerten Betriebs (6) auf eine vorgegebene Führungsgröße (8) gesteuert wird, wobei zu dem Zeitpunkt (16) als Führungsgröße (14) des geregelten Betriebs (12) die Führungsgröße (8) des gesteuerten Betriebs (6) zuzüglich eines Korrekturwerts (18) herangezogen wird, wobei als Führungsgröße (8, 14) jeweils ein aktueller Winkel (ϕ) herangezogen wird, dadurch gegenzeichnet dass mittels des Korrekturwerts (18) eine Abweichung der Winkelstellung im gesteuerten Betrieb (6) von der Führungsgröße (8) derart berücksichtigt wird, dass bei dem Umschalten keine Sprünge innerhalb einer Drehzahl zu erwarten sind.

2. Verfahren (2) nach Anspruch 1,
**dadurch gekennzeichnet,**
**dass** auf die Stellgröße (20) des gesteuerten Betriebs (6) geregelt wird.

3. Verfahren (2) nach Anspruch 2,
**dadurch gekennzeichnet,**
**dass** als Stellgröße (20) des gesteuerten Betriebs (6) ein elektrischer Stromvektor gewählt wird, der in eine erste (I_{d}) und eine zweite Komponente (I_{q}) zerlegt wird, wobei die zweite Komponente (I_{q}) insbesondere gleich Null gewählt wird.

4. Verfahren (2) nach Anspruch 3,
**dadurch gekennzeichnet,**
**dass** der Korrekturwert (18) aus einer bei der Regelung auf die Stellgröße (20) des gesteuerten Betriebs (6) erfassten Regelabweichung (IA_{d}, IA_{q}) ermittelt wird.

5. Verfahren (2) nach Anspruch 4,
**dadurch gekennzeichnet,**
**dass** als Regelabweichung (IA_{d}, IA_{q}) ein I-Anteil gewählt wird.

6. Verfahren (2) nach Anspruch 5,
**dadurch gekennzeichnet,**
**dass** als ein Bestandteil des Korrekturwerts (18) atan(IA_{d}/ (IA_{q}+ EMK)) gewählt wird, wobei IA_{d} den I-Anteil der ersten Komponente (I_{d}), IA_{q} den I-Anteil der zweiten Komponente (I_{q}) und EMK die Gegen-Elektromotorische Kraft der elektrischen Maschine (4) bezeichnet.

7. Verfahren (2) nach einem der Ansprüche 1 bis 6,
**dadurch gekennzeichnet,**
**dass** beim geregelten Betrieb (12) als Stellgröße eine elektrische Spannung (u_{d}, u_{q}) herangezogen wird.

8. Verfahren (2) nach einem der Ansprüche 1 bis 7,
**dadurch gekennzeichnet,**
**dass** unterhalb einer Drehzahlgrenze (10) der gesteuerte Betrieb (6) herangezogen wird.

9. Antrieb (28), der eine elektrische Maschine (4) und einen Umrichter (30) und Steuerungs-und Regelungsmittel zum Durchführen des Verfahrens nach einem der Ansprüche 1 bis 8 aufweist.

10. Antrieb (28) nach Anspruch 9, umfassend eine Vorsteuerung (32) und/oder einen I-Regler (24, 26), insbesondere einen PI-Regler.

## Claims

1. Method (2) for operating an electrical machine (4), in particular a sensorless synchronous machine, in which method a changeover is made from an operating mode (6) with open-loop control to an operating mode (12) with closed-loop control at a time (16), wherein the electrical machine (4) is subjected to open-loop control based on a specified reference variable (8) during the operating mode (6) with open-loop control, wherein the reference variable (8) of the operating mode (6) with open-loop control plus a correction value (18) is used as the reference variable (14) of the operating mode (12) with closed-loop control at the time (16), wherein an actual angle (ϕ) is used as the reference variable (8, 14) in each case, **characterized in that** a deviation in the angular position in the operating mode (6) with open-loop control is taken into consideration by the reference variable (8) by means of the correction value (18) in such a way that no jumps within a rotation speed are to be expected during the changeover.

2. Method (2) according to Claim 1, **characterized in that** closed-loop control is performed based on the actuating variable (20) of the operating mode (6) with open-loop control.

3. Method (2) according to Claim 2, **characterized in that** an electrical current vector which is broken down into a first component (I_{d}) and a second component (I_{q}) is selected as the actuating variable (20) of the operating mode (6) with open-loop control, wherein the second component (I_{q}) is selected to be, in particular, equal to zero.

4. Method (2) according to Claim 3, **characterized in that** the correction value (18) is ascertained from a control deviation (IA_{d}, IA_{q}) detected during the closed-loop control based on the actuating variable (20) of the operating mode (6) with open-loop control.

5. Method (2) according to Claim 4, **characterized in that** an I-component is selected as the control deviation (IA_{d}, IA_{q}) .

6. Method (2) according to Claim 5, **characterized in that** atan (IA_{d}/ (IA_{q}+EMF)) is selected as a constituent part of the correction value (18), where IA_{d} denotes the I-component of the first component (I_{d}), IA_{q} denotes the I-component of the second component (I_{q}), and EMF denotes the back-EMF of the electrical machine (4).

7. Method (2) according to one of Claims 1 to 6, **characterized in that** an electrical voltage (u_{d}, u_{q}) is used as the actuating variable during the operating mode (12) with closed-loop control.

8. Method (2) according to one of Claims 1 to 7, **characterized in that** the operating mode (6) with open-loop control is used below a rotation speed limit (10).

9. Drive (28) which has an electrical machine (4) and a converter (30) and open-loop and closed-loop control means for carrying out the method according to one of Claims 1 to 8.

10. Drive (28) according to Claim 9, comprising a pilot control means (32) or an I-controller (24, 26), in particular a PI controller.

## Revendications

1. Procédé (2) de fonctionnement d'une machine électrique (4), en particulier d'une machine synchrone sans capteur, dans lequel la commutation du fonctionnement commandé (6) au fonctionnement régulé (12) est effectuée à un instant (16), la machine électrique (4) étant commandée sur une grandeur de référence spécifiée (8) pendant le fonctionnement commandé (6), la grandeur de référence (8) du fonctionnement commandé (6) plus une valeur de correction (18) étant utilisée comme grandeur de référence (14) du fonctionnement commandée (12) à l'instant (16), un angle actuel (ϕ) étant utilisé comme grandeur de référence (8, 14), **caractérisé en ce qu'**un écart de la position angulaire dans le fonctionnement régulé (6) par rapport à la grandeur de référence (8) est pris en compte au moyen de la valeur de correction (18) de manière à ce qu'aucun saut à l'intérieur d'une vitesse de rotation ne soit à prévoir lors de la commutation.

2. Procédé (2) selon la revendication 1, **caractérisé en ce qu'**une régulation est effectuée sur la grandeur de réglage (20) du fonctionnement commandé (6).

3. Procédé (2) selon la revendication 2, **caractérisé en ce qu'**un vecteur de courant électrique, qui se décompose en une première composante (I_{d}) et une deuxième composante (I_{q}), est sélectionné comme grandeur de réglage (20) du fonctionnement commandé (6), la deuxième composante (I_{q}) étant choisie notamment égale à zéro.

4. Procédé (2) selon la revendication 3, **caractérisé en ce que** la valeur de correction (18) est déterminée à partir d'un écart de régulation (IA_{d}, IA_{q}) détecté lors de la régulation de la grandeur de réglage (20) du fonctionnement commandé (6).

5. Procédé (2) selon la revendication 4, **caractérisé en ce qu'**une composante I est sélectionnée comme écart de régulation (IA_{d}, IA_{q}) .

6. Procédé (2) selon la revendication 5, **caractérisé en ce que** atan(IA_{d}/(IA_{q}+EMK)) est sélectionné comme composante de la valeur de correction (18), IA_{d} désignant la composante I du premier composant (I_{d}), IA_{q} désignant la composante I du deuxième composant (I_{q}) et EMK désignant la force contre-électromotrice de la machine électrique (4).

7. Procédé (2) selon l'une des revendications 1 à 6, **caractérisé en ce qu'**une tension électrique (u_{d}, u_{q}) est utilisée comme grandeur de réglage pendant le fonctionnement régulé (12).

8. Procédé (2) selon l'une des revendications 1 à 7, **caractérisé en ce que** le fonctionnement commandé (6) est utilisé au-dessous d'une limite de vitesse de rotation (10).

9. Entraînement (28), qui comporte une machine électrique (4) et un convertisseur (30) et des moyens de commande et de régulation destinés à mettre en œuvre le procédé selon l'une des revendications 1 à 8.

10. Entraînement (28) selon la revendication 9, comprenant une commande pilote (32) et/ou un régulateur I (24, 26), notamment un régulateur PI.
